Europäisches Patentamt

(19) European Patent Office

Office européen des brevets

(11) Publication number: **0 061 845**
A2

(12) # EUROPEAN PATENT APPLICATION

(21) Application number: **82301113.5**

(22) Date of filing: **04.03.82**

(51) Int. Cl.³: **F 16 H 3/08**

(30) Priority: **27.03.81 GB 8109706**

(43) Date of publication of application:
**06.10.82 Bulletin 82/40**

(84) Designated Contracting States:
**AT BE DE FR GB IT NL SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Burke, John Puis**
**27 Acacia Road**
**Leamington Spa Warwickshire(GB)**

(72) Inventor: **Young, Alastair John**
**39 Roundshill**
**Kenilworth Warwickshire(GB)**

(74) Representative: **Adkins, Michael et al,**
**Withers & Rogers 4 Dyer's Buildings**
**Holborn London, EC1N 2JT(GB)**

(54) **Rotary transmission.**

(57) The transmission comprises gear trains each being one of a set providing a series of increasing speed ratios and two clutches (12, 13) independently operable and providing alternative drive paths through the gear trains between a common input shaft (11) and a common output shaft (14). The gear trains of alternate ratios in the set are driven respectively through one and the other clutch. One clutch (13) is arranged to drive the output shaft (14) through a first four wheel gear train or through a second four wheel gear train, the gear trains having common first and second gear wheels (21, 22 and 23, 24 or 21, 22 and 23, 30). The other clutch (12) is arranged to drive the output shaft (14) either directly or through a third four wheel gear train which includes gear wheels which are members of at least one of the first and second mentioned four wheel gear trains. The second and third gear wheels of each respective four wheel train are coaxial about a layshaft (15) and one of the gear wheels (24; 30) on the layshaft (15) is journalled for rotation thereon and is selectively drivably connectable to the layshaft.

# ROTARY TRANSMISSION

This invention relates to rotary transmissions of the dual clutch kind by which is meant a transmission having gear trains each being one of a set providing a series of increasing speed ratios, and two clutches independently operable and providing alternative drive paths through the gear trains between a common input and a common output, the gear trains of alternate speed ratios in the set being driven respectively through one and the other clutch.

The invention is particularly though not exclusively applicable to drive transmissions for motor vehicles.

Examples of transmissions of the dual clutch kind are shown in British Patent Specifications Nos. 145,827 (Bramley-Moore), 585,716 (Kegresse) and 795,260 (David Brown). To the best of our knowledge, none of these prior proposals has been commercially adopted.

Another example of a known transmission is found in British Patent No. 615,143 (Ford Motor Company Limited). However the transmission involves the use of several overrunning clutches which makes the gearing rather uneconomical to produce.

An object of the present invention is to provide a rotary transmission utilising relatively few components to provide a desired number of drive ratios and which is smaller and more economical to produce than known transmissions.

According to the invention there is provided a rotary transmission comprising gear trains each being one of a set providing a series of increasing speed ratios and two clutches independently operable and providing alternative drive paths through the gear trains between a common input shaft and a common output shaft, the gear trains of alternate ratios in the set being driven respectively through one and the other clutch, one clutch being arranged to drive the output shaft through a first four wheel gear train or through a second four wheel gear train, the gear trains having common first and second gear wheels, the other clutch being arranged to drive the output shaft either directly or through a third four wheel gear train which includes gear wheels which are member of at least one of the first and second mentioned four wheel gear trains the second and third gear wheels of each respective four wheel train being co-axial about a layshaft, one of the gear wheels on the layshaft being journalled for rotation thereon and being selectively drivably connectable to the layshaft.

In one embodiment the gear wheel journalled on the layshaft is the second wheel of said third gear train. The second gear wheel of the first gear train and the third gear wheel of the third train may be fast for rotation with the layshaft with a space between them and the gear wheel journalled on the layshaft is arranged in the space. With such an arrangement the transmission is particularly compact four speed gearing. Preferably, the fourth gear wheel of said first four wheel gear train is journalled for rotation on the common output shaft and is selectively drivably connectable to the output shaft by selector means, and a further selector means operable independently of the first said selector means is provided for selectively drivably connecting the said other clutch directly to the output shaft.

In another embodiment, a fourth gear train is provided between said layshaft and said output shaft and selectively connectable to drive therebetween, the third gear wheel of said third gear train being journalled on the layshaft and selectively connectable to said layshaft such that six alternative speed ratios are provided between said input and output shafts. It is most advantageous to obtain six ratios by the addition of only one more gear train. Preferably, said fourth gear train comprises one gear wheel fast for rotation with the layshaft and a second gear wheel journalled on the output shaft. Preferably the fourth gear wheel of said first gear train is journalled for rotation on the common output shaft and is selectively drivably connected to the output shaft by first selector means, a second selector means operably independently of the first said selector means is provided for selectively drivably connecting said other clutch directly to the output shaft and a third selector means operably independently of the first and second selector means is provided for selectively drivably connecting said second gear wheel of the fourth gear train to the output shaft.

In a further embodiment the gear wheel journalled on the layshaft is coaxial with a further gear wheel, the two gear wheels being rotatably fast with a common hub which is journalled on the layshaft. In such a case the output shaft may carry selector means which is operable either to drivably connect a gear wheel journalled on the output shaft to the output shaft to form a fourth gear wheel in a train for transmitting drive from the said other clutch to the output shaft through the gears on the common hub, or to connect the said other clutch directly to the output shaft.

Transmissions in accordance with the invention will now be described by way of example with reference to the accompanying drawings in which:-

Fig. 1 is a schematic illustration of a four speed constant mesh rotary transmission having three gear wheel pairs;

Fig. 2 is a schematic illustration of a six speed constant mesh rotary transmission having four gear wheel pairs, and

Fig. 3 is a schematic illustration of a six speed constant mesh rotary transmission having five gear wheel pairs.

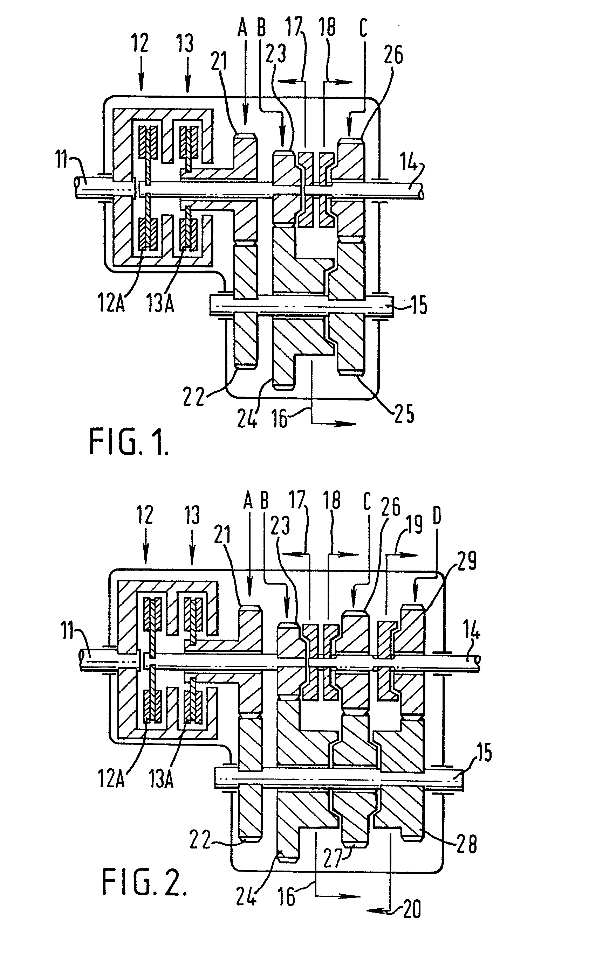

With reference to Fig. 1 there is shown an input shaft 11 from an engine (not shown) and connectable through clutches 12, 13 to drive a co-axial output shaft 14. Three sets of two wheel gear trains A, B & C are provided between the input and output shafts 11, 14 and a layshaft 15.

One clutch 12 has the driving gear wheel 23 of gear train B fast for rotation with its driven member 12A, the driven gear 24 of train B being journalled for rotation on the layshaft 15.

The other clutch 13 has the driving gear 21 of gear train A fast for rotation with its driven member 13A, the driven gear 22 of train A being fast for rotation with the layshaft 15.

The third gear train C has a drive gear wheel 25 fast for rotation with the layshaft 15 and a driven gear wheel 26 journalled on the output shaft 14.

A synchroniser assembly 16 is provided on the gear wheel 24 to selectively connect the wheel 24 of train B to the drive gear wheel 25 of train C. A second synchroniser assembly 17 is provided to selectively connect the drive gear wheel 23 of train B to the output shaft 14 and a third synchroniser assembly 18 is provided to selectively connect the driven gear wheel 26 of train C to the output shafts. Such synchroniser assemblies are independently operable and are well known in rotary transmission art and will not be further described here.

**0061845**

'It is intended that operation of the clutches 12, 13 and the synchroniser assemblies 16, 17 and 18 would be in response to an electro-hydraulic automatic control system (not shown).

A reverse speed ratio may be provided in any convenient manner between the input shaft 11 and the output shaft 14.

Operation of the transmission is as follows:

The vehicle engine is running, both clutches 12, 13 are disengaged,

the synchroniser assemblies 16, 17 and 18 are also disengaged.

To move off from rest synchroniser 16 is shifted to couple gear wheels 24 and 25 and synchroniser assembly 18 is shifted to couple gear wheel 26 to the output shaft 14. Clutch 12 (constituting the aforesaid "other clutch") is engaged and drive transmitted to the output shaft 14 through gear trains B and C (constituting the aforesaid "third four wheel gear trains").

The first to fourth gear wheel of trains B and C are 23, 24, 25 and 26.

Gear train A and the clutch driven member 13A are driven idly by the layshaft 15.

Second speed ratio is pre-selected by virtue of gear train A and clutch driven plate 13A being driven idly by layshaft 15. At the appropriate moment the ratio change is effected by changing drive from clutch 12 to clutch 13.

Drive is now through gear trains A and C and synchroniser assembly 16 may now be disengaged. Gear trains A and C constitute the aforesaid "first four wheel gear train", the first to fourth gears of which are 21, 22, 25 and 26.

Third speed ratio is pre-selected by shifting synchroniser assembly 17 to couple gear wheel 23 to the output shaft 14. Change of speed ratio is effected by disengaging clutch 13 and reengaging clutch 12, drive is direct from the input shaft 11 to the output shaft 14. Synchroniser assembly 18 is disengaged when the ratio change is completed.

Fourth speed ratio is pre-selected by shifting synchroniser assembly 16 to couple gear wheels 24 and 25. To change speed ratio, clutch 12 is disengaged simultaneously with clutch 13 being re-engaged. Drive is now through gear trains A and B (constituting the aforesaid "second four wheel gear train") gear wheel 25 of train C acting as a coupling sleeve between the layshaft and gear wheel 24. The first to fourth gears of the second four wheel gear train are 21, 22, 24 and 23. Synchroniser assembly 17 may remain engaged in readiness for a ratio change to third or may be disengaged. Ratio downchanges are effected in the reverse manner to the upchanges by pre-selecting the next sequential speed ratio and changing drive from one clutch to the other.

It will be seen that the gears 23, 24, 25 and 26 of the third four wheel gear train form part of the gear trains A and C; A and B which form the respect first and second four wheel gear trains.

.With reference to Fig. 2 there is shown a modification of the transmission of Fig. 1 and having an additional gear train D, parts common with the first embodiment have the same reference numerals.

The driving gear 28 of gear train D is fast for rotation with the layshaft 15 whilst the driven gear 29 is journalled on the output shaft 14 for connection thereto by a synchroniser assembly 19.

The layshaft mounted gear 25 of gear train C is now journalled on the layshaft and is connectable with the driving gear 28 of train D by a synchroniser assembly 20.

Operation of the transmission is as described for the previous embodiment, the next required speed ratio being pre-selected prior to changing drive from one clutch to the other.

First speed ratio is provided by engagement of synchroniser assemblies 16, 20 and 19. Engagement of clutch 12 provides drive through gear wheel 27 acting as a coupling sleeve between trains B and D.

Second speed ratio is effectively pre-selected since gear train A and clutch driven member 13A are driven idly by the layshaft 15. Simultaneous engagement of clutch 13 and disengagement of clutch 12 completes the ratio change. Drive is provided through gear trains A and D, synchroniser assembly 20 is now disengaged. Gear trains A and D constitute the aforesaid "first four wheel gear train" the first to fourth gears of which are 21, 22, 28 and 29

Engagement of synchroniser assembly 18 together with assembly 16, still engaged from first speed ratio, pre-selects third speed ratio. Change of drive from clutch 13 to clutch 12 effects the ratio change after which synchroniser assembly 19 can be disengaged. Drive is provided through gear trains B and C. Trains B and C constitute said "third four wheel gear train" comprising gears 23, 24, 27 and 26.

Fourth speed ratio is pre-selected by engagement of synchroniser assembly 20. Simultaneous engagement of clutch 13 and disengagement of clutch 12 provides drive through gear trains A and C, gear wheel 28 acting as a coupling sleeve between the layshaft 15 and gear wheel 27. Synchroniser assembly 16 is disengaged. Trains A, C constitute the aforesaid second four wheel gear train comprising gears 21, 22, 27 and 26.

Fifth speed ratio is preselected by engagement of synchroniser assembly 17 and on change of drive from clutch 13 to clutch 12, the output shaft is connected directly to the input shaft. Synchroniser assembly 18 is disengaged.

Sixth speed ratio is pre-selected by engagement of synchroniser assembly 16 which together with assembly 20, still engaged from fourth speed ratio, idly drives the clutch driven member 13A. The ratio change is effected by changing drive from clutch 12 to clutch 11.

Speed ratio downchanges are effected in the reverse manner, the next required speed ratio being pre-selected prior to changing drive from one clutch to the other.

The gear train D constitutes the aforesaid "fourth gear train".

It will be seen that the gears 26, 27 of the third four wheel gear train B, C are also members of second four wheel gear train A, C used to transmit drive in fourth ratio.

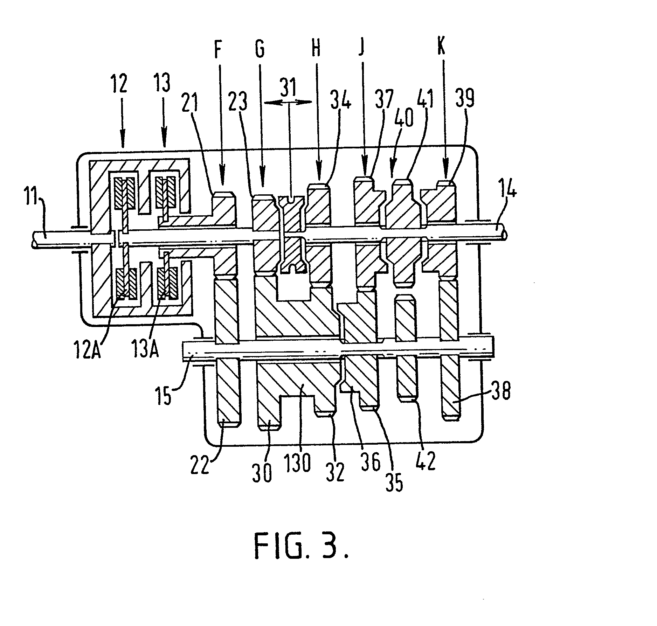

Reference is now made to Figure 3 in which parts common with the first and second embodiments have the same reference numerals.

Two gears 30, 32 are fast with a common hub 130 journalled for rotation on the layshaft 15. Gear 30 meshes with gear 23 and gear 32 meshes with a gear 34 journalled for rotation on the output shaft 14. A synchroniser assembly 31 is arranged on shaft 14 for selectively coupling gears 23 and 34 to the shaft 14. A gear 35 having a synchroniser assembly 36 thereon is rotatably fast with the layshaft 15 and selectively couples the hub 130 to the layshaft. The gear 35 meshes with a gear 37 journalled on the output shaft 14.

The layshaft 15 is rotatably fast with a gear 38 which meshes with a gear 39 journalled on the output shaft 14. The gears 37, 39 can be selectively coupled to the output shaft 14 by a synchroniser assembly 40 having gear teeth 41. A further gear 42 is rotatably fast with the layshaft 15 and is arranged to drive the gear 41 selectively through a lay gear (not shown) when a reverse ratio is required. The gear sets 21, 22 ; 23, 31 ; 34, 32 ; 37, 35 and 39, 38 constitute gear trains F, G, H, J and K respectively.

Operation of the transmission is as follows:-

First speed ratio is provided by coupling hub 130 to layshaft 15 by synchroniser assembly 36 and by coupling gear 37 to output shaft 40 by synchroniser assembly 40. Engagement of clutch 12 provides drive through gear trains G and J to the output shaft 14. Trains G and J constitute for this embodiment the aforesaid "third four wheel gear train" comprising gear wheels 23, 30, 35 and 37.

Second speed ratio is effectively pre-selected since gear train F and clutch driven member 13a are driven idly by the layshaft 15. Simultaneous engagement of clutch 13 and disengagement of clutch 12 completes the ratio change. Drive is provided through gear trains F and J which constitute the aforesaid "first four wheel gear train" comprising gear wheels 21, 22, 35 and 37.

Third speed ratio can then be pre-selected by disengaging synchroniser assembly 36 from hub 31 and moving synchroniser assembly 31 so as to couple gear 34 to the output shaft 14. Change of drive from clutch 13 to clutch 12 effects the ratio change after which synchroniser assembly 40 can be disengaged from gear 37. Drive is then transmitted through gear trains F and G.

Fourth speed ratio is preselected by shifting synchroniser assembly 40 into engagement with gear 39. On change of drive from clutch 12 to clutch 13, the drive is transmitted to shaft 14 through gear trains F and K. Trains F and K constitute the aforesaid "second four wheel gear train" comprising gears 21, 22, 38 and 39.

Fifth speed is then preselected by disengaging synchroniser assembly 31 from gear 34 and moving it into engagement with gear 23 to couple the output shaft 14 directly to the clutch driven member 12a. Change of drive from clutch 13 to clutch 12 is then effected to select fifth gear.

Sixth speed is preselected by moving synchroniser assembly 36 into engagement with hub 130 to couple the latter to the layshaft. Change of drive from clutch 12 to clutch 13 causes drive to be transmitted to the output shaft 14 through gear trains F and G via synchronise assembly 31.

It will be seen that the gears 23, 30, 35 and 37 constituting the said third four wheel gear train are used to transmit drive from the clutch 12 in the first ratio, and that the gears 35 and 37 are also used in the first four wheel train comprising gears 21, 22, 35 and 37 to transmit drive from clutch

**0061845**

13·in the second ratio.

Additional sets of gear wheel pairs may be added to increase the number and range of speed ratios available. The arrangements described
                         three
herein are only  /  of a number of alternative transmissions embodying the

invention.

- 1 -                                    0061845

CLAIMS

1.     A rotary transmission having gear trains each being one of a set providing a series of increasing speed ratios and two clutches (12, 13) independently operable and providing alternative drive paths through the gear trains between a common input shaft (11) and a common output shaft (14), the gear trains of alternate ratios in the set being driven respectively through one and the other clutch, one clutch (13) being arranged to drive the output shaft (14) through a first four wheel gear train or through a second four wheel gear train, the gear trains having common first and second gear wheels (21, 22 and 23, 24 or 21, 22 and 23, 30), the other clutch (12) being arranged to drive the output shaft (14) either directly or through a third four wheel gear train which includes wheels which are members of at least one of the first and second mentioned four wheel gear trains the second and third gear wheels of each respective four wheel train being co-

axial about a layshaft (15), characterised in that one of the gear wheels (24; 30) on the layshaft (15) is journalled for rotation thereon and is selectively drivably connectable to the layshaft.

2.     A transmission according to claim 1, characterised in that the gear wheel (24) jounalled on the layshaft (15) is the second wheel of said third gear train.

3. A transmission according to claim 1 or 2, charactersied in that the second gear wheel (22) of the first gear train (A) and the third gear wheel (25) of the third gear train (C) are fast for rotation with the layshaft with a space between them and the gear wheel (24) is journalled on the layshaft in the space.

4. A transmission according to claim 1, 2 or 3 characterised in that fourth gear wheel (26) of said first four wheel gear train (A,C) is journalled for rotation on the common output shaft (14) and is selectively drivably connectable to the output shaft by selector means (18), and a further selector means (17) operable independently of the first said selector means is provided for selectively drivably connecting the said other clutch (12) directly to the output shaft (14).

5. A transmission according to claim 1, characterised in that a fourth gear train (D) is provided between said layshaft (15) and said output shaft (14) and selectively connectable to drive therebetween, the third gear wheel (27) of said third gear train (B, C) being journalled on the layshaft (15) and selectively connectable to said layshaft such that six alternative speed ratios are provided between said input and output shafts (11 and 14).

6. A transmission according to claim 6, characterised in that said fourth gear train comprises one gear wheel (28) fast for rotation with the layshaft and a second gear wheel (29) journalled on the output shaft.

7.    A transmission according to claim 6, characterised in that the third gear wheel (27) of said third gear train (B, C) is connectable to the second gear wheel (24) of the third gear train (B) and to said one gear wheel (28) of the fourth gear train (D).

8.    A transmission according to claim 6 or 7 characterised in that the fourth gear wheel (26) of said first gear train (A, C) is journalled for rotation on the common output shaft (14) and is selectively drivably connected to the output shaft by first selector means 18, a second selector means (17) operable independently of the first said selector means is provided for selectively drivably connecting said other clutch (12) directly to the output shaft (14) and a third selector means (19) operable independently of the first and second selector means is provided for selectively drivably connecting said second gear wheel 29 of the fourth gear train (D) to the output shaft (14).

9.    A transmission according to claim 1 characterised in that the gear wheel (30) journalled on the layshaft is coaxial with a further gear wheel (32), the two gear wheels (30, 32) being rotatably fast with a common hub (130) which is journalled on the layshaft.

10. A transmission according to claim 9 characterised in that the output shaft (14) carries selector means (31) which is operable either to drivably connect a gear wheel (34) journalled on the output shaft to the output shaft to form a fourth gear wheel in a train (G, H) for transmitting drive from the other clutch (12) to the output shaft through the gears (30, 32) on the common hub (130) or to connect the said other clutch (12) directly to the output shaft (14).

FIG. 1.

FIG. 2.

FIG. 3.